# EUROPÄISCHE PATENTSCHRIFT

(11) **EP 2 571 970 B1**
(45) Veröffentlichungstag und Bekanntmachung des Hinweises auf die Patenterteilung: **15.10.2014**
(21) Anmeldenummer: 11719149.4
(22) Anmeldetag: 02.03.2011
(51) Int. Cl.: C11C 1/08, C11C 3/00, C10L 1/02

(54) **VERFAHREN ZUR HERSTELLUNG VON BIODIESEL**
PROCESS FOR PRODUCTION OF BIODIESEL
PROCÉDÉ DE FABRICATION DE BIODIESEL

(30) Priorität: 20.05.2010 DE 102010022139
(43) Veröffentlichungstag der Anmeldung: 27.03.2013
(73) Patentinhaber: Air Liquide Global E&C Solutions Germany GmbH, 60439 Frankfurt am Main (DE)
(72) Erfinder: SEIDEL, Eckhard, Dr., 60385 Frankfurt am Main (DE); BÖNSCH, Rudolf, Dr., 55299 Nackenheim (DE); PALAUSCHEK, Norbert, 65510 Idstein (DE); SAFT, Helmut, 61194 Niddatal (DE)
(86) Internationale Anmeldenummer: PCT/DE2011/000209
(87) Internationale Veröffentlichungsnummer: WO 2011/144192

(56) Entgegenhaltungen:
- WO-A1-2009/132670
- WO-A2-2007/076163
- WO-A2-2009/080287
- US-A1- 2009 199 460
- DUNN ET AL: "Effects of minor constituents on cold flow properties and performance of biodiesel", PROGRESS IN ENERGY AND COMBUSTION SCIENCE, ELSEVIER SCIENCE PUBLISHERS, AMSTERDAM, NL, Bd. 35, Nr. 6, 1. Dezember 2009 (2009-12-01), Seiten 481-489, XP026733243, ISSN: 0360-1285, DOI: DOI:10.1016/J.PECS.2009.07.002 [gefunden am 2009-08-19]

## Beschreibung

Die Erfindung betrifft ein Verfahren zur Herstellung von Fettsäurealkylester zur Verwendung als Biodiesel aus pflanzlichen Ölen oder tierischen Fetten durch Umesterung der in den Fetten oder Ölen enthaltenen Triglyceride mit Methanol oder Ethanol in Gegenwart eines alkalischen Katalysators zu Roh-Fettsäurealkylester, anschließender Wäsche des Roh-Fettsäurealkylesters mit Wasser zur Entfernung wasserlöslicher Verunreinigungen wie Seifen, Glycerinreste und Salze, anschließender Trocknung durch Erwärmen bei atmosphärischem Druck oder Unterdruck zur Ausdampfung des Wasseranteils und daran anschließender Entfernung gelöster Sterylglycoside durch Adsorption.

Verfahren zur Herstellung von Biodiesel durch Umesterung von pflanzlichen Ölen oder tierischen Fetten sind, z.B. aus DE 10 2006 044 467 B4, bekannt. Weiterhin ist, zum Beispiel aus dem Fachartikel "The Role of Sterol Glucosides on Filter Plugging", Inmok Lee u.a., Biodiesel Magzine, April 2007, bekannt, dass bei der Umesterung von natürlichen Fetten oder Ölen mit Alkylalkohol, die in den Fetten oder Ölen natürlicherweise vorhandenen Sterylglycoside ihre Löslichkeit sowohl im Öl bzw. Fett, als auch im, durch die Umesterung gewonnenen, Fettsäurealkylester, größtenteils verlieren, sodass sie als feine Schwebeteilchen ausfallen und beim Einsatz des Fettsäurealkylesters als Biodiesel, zu Verstopfungen der Dieselfilter und Ablagerungen im Motor führen.

Verfahren zur Entfernung der Sterylglycoside aus dem durch Umesterung entstandenen Fettsäurealkylester mittels Adsorption, sind ebenfalls bekannt.

In WO 2009/132670 wird ein Verfahren zur Reinigung von Biodiesel vorgestellt, bei dem ein eine Smektit-Kieselgel-Mischphase enthaltendes Adsorbens speziell zur Entfernung von Sterylglycosiden verwendet wird. In den in dieser Schrift beschriebenen Beispielen wird als Vergleichsmaterial Calciumbentonit als Adsorbens herangezogen. Die Versuche wurden durchgeführt, indem das Adsorbens, bei Raumtemperatur, in den zu reinigenden Fettsäurealkylester eingerührt und anschließend abgefiltert wurde. Dabei wurde eine deutlich geringere Adsorptionsfähigkeit bezüglich Sterylglycosiden des Calciumbentonits gegenüber einer Smektit-Kieselgel-Mischphase gemessen.

Zur Regenerierung der Adsorptionssäule werden in dieser Schrift, WO 2009/132670, Gemische aus Alkanen oder chlorierten Kohlenwasserstoffen vorgeschlagen und die Verwendung eines Gemischs aus Chloroform und Methanol im Versuch beschrieben. Besonders bei den chlorierten Kohlenwasserstoffen und bei Chloroform handelt es sich um Stoffe mit einem hohen Gefahrenpotential für Gesundheit und Umwelt.

Es bestand daher die Aufgabe, ein Verfahren zur Herstellung von Biodiesel zu entwickeln, bei dem die Entfernung der Sterolglycoside durch die Verwendung kostengünstiger Adsorbentien, wie z.B. Bleicherden erfolgt, das aber ohne diese gefährlichen Hilfsmittel zur Regenerierung der Adsorbentien auskommt.

Die Aufgabe wurde dadurch gelöst, dass die Adsorption in Gegenwart mindestens eines Adsorbens auf Tonmineralbasis durchgeführt wird und die Regenerierung des mit Sterylglycosiden beladenen Adsorbens oder der Adsorbentien im Wesentlichen durch Behandlung mit einem Fettsäurealkylester-Alkohol-Gemisch erfolgt.

Eigene Versuche haben gezeigt, dass Calciumbentonit, wenn es nicht, wie in WO 2009/132670 beschrieben, in den Fettsäurealkylester eingerührt wird, sondern als Granulatbett in einer Adsorptionskolonne verwendet wird, durchaus ein geeignetes Adsorptionsmittel zur Entfernung von Sterylglycosiden darstellt.

Daher besteht eine vorteilhafte Variante der Erfindung darin, als Adsorbens Bentonit, bevorzugt Calciumbentonit, zu verwenden.

Weiterhin hat es sich als vorteilhaft erwiesen, als Alkohol in dem zur Regenerierung verwendeten Gemisch Methanol oder Ethanol, je nach dem, mit welchem Alkohol die Umesterung durchgeführt wurde, zu verwenden und dabei ein Gewichtsanteilsverhältnis von Fettsäurealkylester zu Methanol zwischen 19:1 und 1:1, bevorzugt zwischen 9:1 und 4:1 einzustellen.

Um nach der Regenerierung Methanolreste aus dem Adsorbens zu entfernen, ist es vorteilhaft, dieses mit einem inerten Gas, vorzugsweise Stickstoff oder Kohlendioxid oder Mischungen davon, zu spülen.

Es ist vorteilhaft, die Reinigung des erzeugten Fettsäurealkylesters durch Adsorption kontinuierlich durchzuführen und dazu mindestens zwei Adsorptionskolonnen parallel zu schalten, sodass zeitgleich in mindestens einer Adsorptionskolonne die Adsorption und in mindestens einer weiteren Adsorptionskolonne die Regenerierung durchgeführt werden kann.

Als vorteilhaft für die Adsorption der Sterylglycoside haben sich Betriebstemperaturen im Bereich zwischen 60 und 150°C und für die Regenerierung des Adsorbens oder der Adsorbentien im Bereich von 40 bis 60°C erwiesen.

Um den im zur Regenerierung verwendeten Fettsäurealkylester-Methanol-Gemisch enthaltenen Fettsäurealkylester zurückzugewinnen, ist ein Verfahren vorteilhaft, bei dem in einem ersten Schritt der Methanol-Anteil durch Destillation vom Fettsäurealkylesteranteil abgetrennt wird, wobei die Sterylglycoside im Esteranteil verbleiben, und in einem zweiten Schritt, gemäß der deutschen Patentanmeldung 102010011606.8, durch Einmischen einer starken Säure in den Fettsäurealkylester oder durch in Kontakt bringen des Fettsäurealkylesters mit einem sauer wirkenden Ionentauscher die Sterylglycoside in ihren Steryl- und ihren Zuckeranteil gespalten werden und daran anschließend der aufgearbeitete Fettsäurealkylester in die Wäsche des Roh-Fettsäurealkylesters geleitet wird, wobei der Zuckeranteil in die Waschwasserphase übergeht.

Weiterbildungen, Vorteile und Anwendungsmöglichkeiten der Erfindung ergeben sich auch aus der nachfolgenden Beschreibung eines Anwendungsbeispiels und der Zeichung. Dabei bilden alle beschriebenen und/oder bildlichen Merkmale für sich oder in beliebiger Kombination den Gegenstand der Erfindung, unabhängig von ihrer Zusammenfassung in den Ansprüchen oder deren Rückbeziehung.

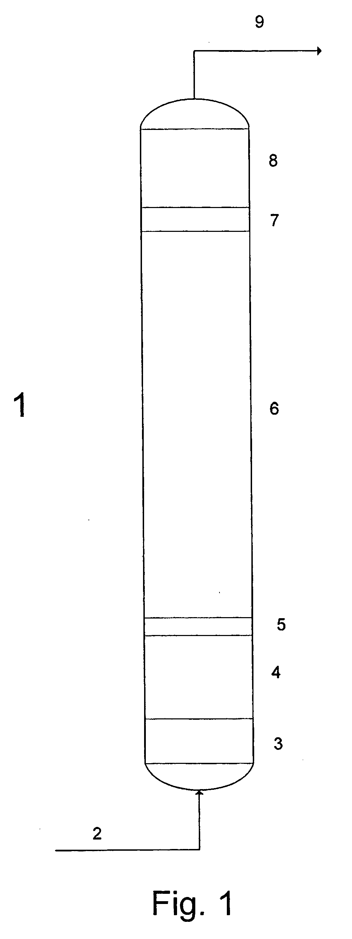

Im folgenden Beispiel 1, in Verbindung mit der Zeichnung Fig. 1, wird der Teil des erfindungsgemäße Verfahrens erläutert, der mit der Adsorption der Sterylglycoside an Calciumbentonit und mit der anschließenden Desorption befasst ist.

Bei der Durchführung des Beispiels wurden folgende Mess- und Analysenmethoden angewandt:
- Bestimmung von Fettsäuremethylester, DIN EN 14103
- Bestimmung von Sterylglycosiden, Sterole, DIN EN 14105
- Bestimmung von Methanol, DIN EN 14110

Für den Adsorptions- und den Desorptionsversuch wurde ein 80 cm langer Doppelmantelglaszylinder mit einem inneren Durchmesser von 5 cm verwendet. In Fig. 1 ist der Aufbau der Adsoptionskolonne dargestellt. Der Doppelmantel, mit dem die Kolonne zur Beheizung ausgestattet war, ist in Fig. 1 nicht dargestellt.

Der zu reinigende Biodiesel tritt über die Leitung (2) von unten in die Kolonne ein. Die Kolonne ist aus folgenden Schichten aufgebaut:
- (3) eine 5 cm starke Schicht aus Glaskugeln, der Durchmesser der Kugeln beträgt 10 mm
- (4) eine 12 cm starke Schicht aus Glaskugeln, der Durchmesser der Kugeln beträgt 4 mm
- (5) eine 2 cm starke Schicht aus Glaswolle
- (6) eine 37 cm starke Schicht aus Calciumbentonit-Pulver, Schüttdichte 630 g/l, Korngrößenverteilung (Trockensiebanalyse): > 1,0 mm: 5,0 % max., > 0,2 mm: 5,0 %
- (7) eine 2 cm starke Schicht aus Glaswolle
- (8) eine 7 cm starke Schicht aus Glaskugeln, der Durchmesser der Kugeln beträgt 4 mm

Über Leitung (9) trat der Biodiesel aus der Kolonne aus. Bei dem Biodiesel handelte es sich um aus Palmöl durch Umesterung mit Methanol erzeugten Fettsäuremethylester, der in einer Waschkolonne mit Wasser gewaschen und anschließend bei 110°C auf einen Wassergehalt von 107 ppm getrocknet worden war und dessen Sterylglycosidgehalt 116 ppm betrug.

Die Biodiesel Norm EN 14214 begrenzt die zulässige Gesamtverschmutzung des Biodiesels auf 24 ppm. Da sonstige Verschmutzungen, wie Seifen und Salze, durch die vorausgegangene Wasserwäsche aus dem Roh-Biodiesel weitgehend entfernt wurden, kann davon ausgegangen werden, dass es sich bei den nach der Wasserwäsche noch vorhandenen Verunreinigungen im Wesentlichen um Sterylglycoside handelt, sodass der zulässige Gehalt von 24 ppm weitgehend von diesen ausgenutzt werden kann.

Im ersten Adsorptionsschritt wurde der Biodiesel, bei einer Betriebstemperatur von 80°C, mit 0,7 l/h durch die Kolonne gefahren. Der Sterylglycosidgehalt im Biodiesel nach Verlassen der Kolonne betrug in den ersten drei Betriebsstunden 19 ppm und in der 4. bis 19. Betriebsstunde 9 ppm. Nach der 19. Betriebsstunde stieg der Sterylglycosidgehalt an, wodurch ersichtlich war, dass die Aufnahmefähigkeit der Adsorptionskolonne erschöpft war.

Im ersten Desorptionsschritt wurde die Kolonne anschließend, bei einer Betriebstemperatur von 60°C mit einem Gemisch aus Fettsäuremethylester und Methanol, mit einem gewichtsmäßigen Mischungsverhältnis von 4:1, 2 Stunden lang mit einem Strom von 0,3 l/h, in der gleichen Richtung wie im Adsorptionsschritt, durchfahren. Anschließend wurde die Kolonne 2 Stunden lang, bei einer Betriebstemperatur von 80°C mit einem Stickstoffstrom von 0,3 l/h gespült, um Methanolreste zu entfernen.

Im zweiten Adorptionsschritt wurde der Biodiesel, bei einer Betriebstemperatur von 50°C, mit 0,7 l/h durch die Kolonne gefahren. Der Sterylglycosidgehalt im Biodiesel nach Verlassen der Kolonne betrug von der 1. bis zur 19. Betriebsstunde gleichbleibend 21 ppm.

Danach stieg der Sterylglycosidgehalt wiederum an, sodass ein erneuter Desorptionsschritt erforderlich wurde.

Dieser Zyklus aus Adsorption und Desorption konnte bis zu zwanzigmal wiederholt werden, wobei allerdings die Beladbarkeit des Adsorbens mit der Zeit abnahm, sodass mit zunehmender Zyklenzahl die Aufnahmefähigkeit des Adsorbens schon nach weniger als 19 Betriebsstunden erschöpft war.

## Patentansprüche

1. Verfahren zur Herstellung von Fettsäurealkylester zur Verwendung als Biodiesel aus pflanzlichen Ölen oder tierischen Fetten durch Umesterung der in den Fetten oder Ölen enthaltenen Triglyceride mit Methanol oder Ethanol in Gegenwart eines alkalischen Katalysators zu Roh-Fettsäurealkylester, anschließender Wäsche des Roh-Fettsäurealkylesters mit Wasser zur Entfernung wasserlöslicher Verunreinigungen wie Seifen, Glycerinreste und Salze, anschließender Trocknung durch Erwärmen bei atmosphärischem Druck oder Unterdruck zur Ausdampfung des Wasseranteils und daran anschließender Entfernung gelöster Sterylglycoside durch Adsorption,
**dadurch gekennzeichnet, dass** die Adsorption in Gegenwart mindestens eines Adsorbens auf Tonmineralbasis durchgeführt wird und die Regenerierung des mit Sterylglycosiden beladenen Adsorbens oder der Adsorbentien im Wesentlichen durch Behandlung mit einem Fettsäurealkylester-Alkohol-Gemisch erfolgt.

2. Verfahren nach Anspruch 1, **dadurch gekennzeichnet, dass** als Adsorbens Bentonit, bevorzugt Calciumbentonit, verwendet wird.

3. Verfahren nach Anspruch 1, **dadurch gekennzeichnet, dass** es sich bei dem in dem Fettsäurealkylester-Alkohol-Gemisch verwendeten Alkohol um Methanol oder Ethanol handelt.

4. Verfahren nach Anspruch 3, **dadurch gekennzeichnet, dass** in dem Fettsäurealkylester-Alkohol-Gemisch das Gewichtsanteilsverhältnis von Fettsäurealkylester zu Methanol zwischen 19:1 und 1:1, bevorzugt zwischen 9:1 und 4:1 liegt.

5. Verfahren nach Anspruch 1, **dadurch gekennzeichnet, dass** in Anschluss an die Regenerierung gemäß einem der vorangehenden Ansprüche eine weitere Behandelung des Adsorbens oder der Adsorbentien mit einem inerten Gas, vorzugsweise Stickstoff oder Kohlendioxid oder Mischungen davon, erfolgt.

6. Verfahren nach einem der vorigen Ansprüche, **dadurch gekennzeichnet, dass** die Adsorption in mindestens zwei parallel geschalteten Adsorptionskolonnen durchgeführt wird, wobei zeitgleich in mindestens einer Adsorptionskolonne die Adsorption und in mindestens einer weiteren Adsorptionskolonne die Regenerierung durchgeführt wird.

7. Verfahren nach einem der vorigen Ansprüche, **dadurch gekennzeichnet, dass** die Adsorption der Sterylglycoside bei einer zwischen 60 und 150°C liegenden Betriebstemperatur erfolgt.

8. Verfahren nach einem der vorigen Ansprüche, **dadurch gekennzeichnet, dass** die Regenerierung des Adsorbens oder der Adsorbentien bei einer Betriebstemperatur von 40 bis 60°C erfolgt.

9. Verfahren nach einem der vorigen Ansprüche, **dadurch gekennzeichnet, dass** das zur Regenerierung des Adsorbens oder der Adsorbentien verwendete und mit Sterylglycosiden beladene Fettsäurealkylester-Methanol-Gemisch aufgearbeitet wird, indem in einem ersten Schritt der Methanol-Anteil durch Destillation vom Fettsäurealkylesteranteil abgetrennt wird, wobei die Sterylglycoside im Esteranteil verbleiben, und in einem zweiten Schritt durch Einmischen einer starken Säure in den Fettsäurealkylester oder durch in Kontakt bringen des Fettsäurealkylesters mit einem sauer wirkenden Ionentauscher die Sterylglycoside in ihren Steryl- und ihren Zuckeranteil gespalten werden.

10. Verfahren nach Anspruch 9, **dadurch gekennzeichnet, dass** der aufgearbeitete Fettsäureälkylester in die Wäsche des Roh-Fettsäurealkylesters geleitet wird.

## Claims

1. A method for producing fatty acid alkyl ester for use as biodiesel from vegetable oils or animal fats by transesterification of the triglycerides contained in the fats or oils with methanol or ethanol in the presence of an alkaline catalyst to crude fatty acid alkyl ester, subsequent washing of the crude fatty acid alkyl ester with water to remove water-soluble impurities such as soaps, glycerol residues and salts, subsequent drying by heating at atmospheric pressure or negative pressure for evaporating the water content, and subsequent removal of dissolved steryl glycosides by adsorption,
**characterized in that** the adsorption is carried out in the presence of at least one adsorbent on the basis of clay mineral and the regeneration of the adsorbent or adsorbents loaded with steryl glycosides substantially is effected by treatment with a fatty acid alkyl ester/alcohol mixture.

2. The method according to claim 1, **characterized in that** bentonite, preferably calcium bentonite, is used as adsorbent.

3. The method according to claim 1, **characterized in that** the alcohol used in the fatty acid alkyl ester/alcohol mixture is methanol or ethanol.

4. The method according to claim 3, **characterized in that** in the fatty acid alkyl ester/alcohol mixture the weight content ratio of fatty acid alkyl ester to methanol lies between 19:1 and 1:1, preferably between 9:1 and 4:1.

5. The method according to claim 1, **characterized in that** subsequent to the regeneration according to any of the preceding claims a further treatment of the adsorbent or the adsorbents is effected with an inert gas, preferably nitrogen or carbon dioxide or mixtures thereof.

6. The method according to any of the preceding claims, **characterized in that** the adsorption is carried out in at least two adsorption columns connected in parallel, wherein at the same time the adsorption is carried out in at least one adsorption column and the regeneration is carried out in at least one further adsorption column.

7. The method according to any of the preceding claims, **characterized in that** the adsorption of the steryl glycosides is effected at an operating temperature lying between 60 and 150°C.

8. The method according to any of the preceding claims, **characterized in that** the regeneration of the adsorbent or adsorbents is effected at an operating temperature of 40 to 60°C.

9. The method according to any of the preceding claims, **characterized in that** the fatty acid alkyl ester/methanol mixture used for regenerating the adsorbent or adsorbents and loaded with steryl glycosides is processed **in that** in a first step the methanol fraction is separated from the fatty acid alkyl ester fraction by distillation, wherein the steryl glycosides remain in the ester fraction, and in a second step the steryl glycosides are split into their steryl and their sugar fraction by mixing a strong acid into the fatty acid alkyl ester or by contacting the fatty acid alkyl ester with an acidically acting ion exchanger.

10. The method according to claim 9, **characterized in that** the processed fatty acid alkyl ester is passed into the wash of the crude fatty acid alkyl ester.

## Revendications

1. Procédé de préparation d'ester alcoylique d'acide gras à utiliser comme biodiesel à partir d'huiles végétales ou de graisses animales par transestérification, par le méthanol ou par l'éthanol en la présence d'un catalyseur alcalin, des triglycérides contenus dans les graisses ou dans les huiles en de l'ester alcoylique d'acide gras brut, puis lavage de l'ester alcoylique d'acide gras brut par de l'eau pour l'élimination des impuretés solubles dans l'eau, comme des savons, des restes de glycérine et des sels, puis séchage par chauffage à la pression atmosphérique ou sous dépression pour l'évaporation de la proportion d'eau et ensuite élimination des stéryl-glycosides dissous par adsorption,
**caractérisé en ce que** l'on effectue l'adsorption en la présence d'au moins un adsorbant à base d'argile minérale et la régénération de l'adsorbant ou des adsorbants chargés de stéryl-glycosides essentiellement en traitant par un mélange d'alcool et d'ester alcoylique d'acide gras.

2. Procédé suivant la revendication 1, **caractérisé en ce qu'**on utilise comme adsorbant de la bentonite, de préférence de la bentonite de calcium.

3. Procédé suivant la revendication 1, **caractérisé en ce que** l'alcool utilisé dans le mélange d'alcool et d'ester alcoylique d'acide gras est le méthanol ou l'éthanol.

4. Procédé suivant la revendication 3, **caractérisé en ce que**, dans le mélange d'alcool et d'esters alcoylique d'acide gras, le rapport en poids de l'ester alcoylique d'acide gras au méthanol est compris entre 19 :1 et 1 :1, de préférence entre 9 :1 et 4 :1.

5. Procédé suivant la revendication 1, **caractérisé en ce qu'**à la suite de la régénération suivant l'une des revendications précédentes, on effectue un traitement supplémentaire de l'adsorbant ou des adsorbants par un gaz inerte, de préférence par de l'azote ou par du dioxyde de carbone ou par leurs mélanges.

6. Procédé suivant l'une des revendications précédentes, **caractérisé en ce que** l'on effectue l'adsorption dans au moins deux colonnes d'adsorption montées en parallèle, en effectuant, en même temps dans au moins l'une des colonnes d'adsorption l'adsorption et dans au moins une autre colonnes d'adsorption la régénération.

7. Procédé suivant l'une des revendications précédentes, **caractérisé en ce qu'**on effectue l'adsorption des stérylglycosides à une température de fonctionnement comprise entre 60 et 150°C.

8. Procédé suivant l'une des revendications précédentes, **caractérisé en ce qu'**on effectue la régénération de l'adsorbant ou des adsorbants à une température de fonctionnement de 40 à 60°C.

9. Procédé suivant l'une des revendications précédentes, caractérisé en ce l'on retraite le mélange de méthanol et d'ester alcoylique d'acide gras utilisé pour la régénération de l'adsorbant ou des adsorbants et chargé de stérylglycosides en séparant dans un premier stade la partie méthanol de la partie ester alcoylique d'acide gras par distillation, les stérylglycosides restant dans la partie ester et dans un deuxième stade en séparant les stérylglycosides en leur partie stéryle et en leur partie sucre par mélange d'un acide fort à l'ester glycoylique d'acide gras ou par mise en contact de l'ester glycoylique d'acide gras avec un échangeur d'ions acide.

10. Procédé suivant la revendication 9, **caractérisé en ce que** l'on envoie l'ester alcoylique d'acide gras traité au lavage de l'ester alcoylique d'acide gras brut.
